# EUROPÄISCHE PATENTSCHRIFT

(11) **EP 3 128 170 B1**
(45) Veröffentlichungstag und Bekanntmachung des Hinweises auf die Patenterteilung: **28.02.2018**
(21) Anmeldenummer: 15180030.7
(22) Anmeldetag: 06.08.2015
(51) Int. Cl.: F03D 7/02, F03D 7/04

(54) **WINDENERGIEANLAGE MIT EINEM AZIMUTANTRIEB**
WIND POWER FACILITY WITH A YAW DRIVE
ÉOLIENNE AVEC ENTRAINEMENT AZIMUTAL

(43) Veröffentlichungstag der Anmeldung: 08.02.2017
(73) Patentinhaber: Nordex Energy GmbH, 22419 Hamburg (DE)
(72) Erfinder: Behnke, Merten, 23974 Alt Farpen (DE)
(74) Vertreter: Hauck Patentanwaltspartnerschaft mbB

(56) Entgegenhaltungen:
- EP-A2- 2 527 646
- WO-A1-2014/121795
- WO-A2-2008/009354
- KR-A- 20120 053 733

## Beschreibung

Die vorliegende Erfindung betrifft eine Windenergieanlage mit einem Turm und einem auf dem Turm drehbar gelagerten Maschinenhaus, das über einen Azimutantrieb und eine Azimutbremse um eine Turmachse verstellbar ist und das einen Rotor mit mindestens einem von einem Pitchantrieb um seine Längsachse verstellbaren Rotorblatt aufweist.

Aus EP 2 339 174 A1 ist ein System zum Auslösen einer Sicherheitskette einer Windenergieanlage bekannt. Das System weist einen Beschleunigungssensor und eine mit dem Sensor gekoppelte Schätzeinrichtung auf, wobei die Schätzeinrichtung ausgeführt ist, einen Beschleunigungswert von dem Sensor zu empfangen und eine Drehzahl des Rotors, basierend auf dem Beschleunigungswert zu schätzen. Eine Auslöseeinheit ist mit der Schätzeinheit verbunden, wobei die Auslöseeinheit bei Überschreiten eines vorgegebenen Drehzahlwertes ein Notfallsystem auslöst. Für die Auslösung des Notfallsystems kann auch auf Werte der Rotorazimutstellung zurückgegriffen werden.

Aus EP 1 971 772 B1 ist ein Verfahren zum Betreiben einer Windenergieanlage bekannt geworden, bei dem mit Auftritt eines Störsignals ein Sicherheitssystem ausgelöst wird und nachfolgend eine Abbremsung des Rotors über ein Zusammenwirken einer Winkelverstellung eines Rotorblatts und der Ansteuerung einer mechanischen Bremse erfolgt. Die Winkelverstellung des Rotorblatts erfolgt über einen Zeitraum von einer halben bis einer ganzen Schwingungsperiode des Turms bei einer mittleren Winkelverstellrate von weniger als 6,5°/s für das Rotorblatt. Hierbei wird das Abbremsen des Rotors über eine Winkelverstellung des Rotorblatts mit dem Abbremsen des Rotors über eine mechanische Bremsvorrichtung kombiniert, um die Windenergieanlage selbst bei starken Windböen und gleichzeitigem Lastabwurf des Generators sicher zum Stillstand bringen zu können.

Aus US 2012/0134807 A1 ist ein Verfahren zur Verhinderung einer Überdrehzahl einer Windenergieanlage bekannt. Das Verfahren sieht vor, bei einer Abweichung der Azimutstellung des Maschinenhauses von einem vorbestimmten Sollwert eine zusätzliche Belastung durch ein In-den-Wind-Drehen des Rotorblatts zu vermeiden.

Aus DE 10 2006 034 251 B4 ist ein Verfahren zum Betreiben einer Windenergieanlage bekannt geworden, wobei die Windenergieanlage nach Auslösen eines Abschaltsignals von einer Sicherheitsabschalteinrichtung abgeschaltet wird, wobei die Sicherheitsabschalteinrichtung einer Betriebsführungseinrichtung der Windenergieanlage logisch übergeordnet ist, und anspricht, wenn sicherheitsrelevante Grenzwerte überschritten wurden und die Betriebsführung die Führung der Windenergieanlage verloren hat. Die Windenergieanlage kann nach ihrer Sicherheitsabschaltung mittels einer von der Windenergieanlage räumlich getrennten Bedienungseinrichtung wieder zum Betrieb freigegeben werden, wenn eine Analyse in einer Fernüberwachungszentrale ergeben hat, dass kein die Anlage oder deren Hauptkomponenten gefährdender Zustand vorliegt, wobei die Wiederinbetriebnahme auch dann erfolgen kann, wenn keine Inspektion durch Servicepersonal vor Ort erfolgte.

Aus EP 2 549 098 A2 ist ein Verfahren zum Betreiben einer Windenergieanlage bekannt geworden, bei dem das Maschinenhaus mittels einer Azimut-Sondersteuerung zu einer Azimut-Sonderposition verfahren wird, wenn eine die Azimut-Sondersteuerung definierende Eintrittsbedingung erfüllt ist. Eine Azimut-Sonderposition wird beispielsweise angefahren, indem die automatische Windnachführung unterbrochen und eine gewünschte Azimut-Position an der Windenergieanlage selbst oder über eine Fernüberwachung eingestellt wird. Nach Beendigung der Azimut-Sondersteuerung wird die automatische Windnachführung wieder aktiviert.

Aus EP 2 884 098 A1 ist eine Windenergieanlage bekannt geworden, die eine Hauptsteuerung, eine Minimalsteuerung und ein Überwachungsmodul aufweist. Die Windenergieanlage vermeidet, dass mit Öffnen der Sicherheitskette der Hauptsteuerung die Kontrolle über die Windenergieanlage entzogen und die Windenergieanlage in einem ungeregelten Vorgang hart abgebremst wird. Hierzu wird eine Minimalsteuerung vorgeschlagen, die aus einem Zustandsgrößenteilsatz Stellvorgaben für den Pitchwinkel und/oder die Pitchgeschwindigkeit ermittelt. Das Überwachungsmodul überwacht die Hauptsteuerung und übergibt bei einem Fehler in der Ausführung der Hauptsteuerung die Kontrolle über die Windenergieanlage an die Minimalsteuerung.

Aus EP 2 063 109 B1 ist ein Verfahren zum Betreiben einer Windenergieanlage bekannt, das bei einem Fehler des Pitchsystems eine Azimutfahrt des Maschinenhauses der Windenergieanlage bis zu einer vorbestimmten Azimut-Position aus dem Windinitiiert. Hierbei kann die Situation auftreten, dass durch ein Abschalten der Spannungsversorgung beim Auslösen der Sicherheitskette, beispielsweise in Folge einer Überdrehzahl, die Azimutfahrt nicht beendet werden kann und so der Rotor der Windenergieanlage möglicherweise im Wind verbleibt. Aus WO 2013/182514 A1 ist ein Sicherheitssystem für eine Windenergieanlage bekannt geworden, bei dem Steuersignale zum Ansteuern der Fahnenposition der Rotorblätter zweikanalig an eine Sicherheitsschalteinrichtung übertragen werden.

Ein weiteres Beispiel aus dem Stand der Technik ist aus WO2014121795 bekannt. Der Erfindung liegt die Aufgabe zugrunde, eine Windenergieanlage mit einem Betriebsverfahren bereitzustellen, das mit möglichst einfachen Mitteln auch bei auftretender Überdrehzahl Überlasten an der Windenergieanlage vermeidet.

Erfindungsgemäß wird die Aufgabe durch eine Windenergieanlage mit den Merkmalen aus Anspruch 1 gelöst. Vorteilhafte Ausgestaltungen bilden den Gegenstand der Unteransprüche.

Die erfindungsgemäße Windenergieanlage weist einen Turm und ein auf dem Turm drehbar gelagertes Maschinenhaus auf, das über einen Azimutantrieb und eine Azimutbremse um eine Turmachse verstellbar ist und das einen Rotor mit mindestens einem von einem Pitchantrieb um seine Längsachse verstellbaren Rotorblatt aufweist. Weiterhin sind in der Windenergieanlage eine Betriebsführung und eine der Betriebsführung logisch übergeordnete Sicherheitseinrichtung vorgesehen, wobei die Betriebsführung den Azimutantrieb, die Azimutbremse und den Pitchantrieb ansteuert, und bei Auslösen der Sicherheitseinrichtung eine Sicherheitsabschaltung der Windenergieanlage erfolgt. Erfindungsgemäß ist eine Notfahrt-Steuerungseinrichtung vorgesehen, die, ansprechend auf ein Notfahrtsignal, aus einer Fernverbindungssteuerung die Azimutbremse und den Azimutantrieb zu einer Notfahrt ansteuert. Die erfindungsgemäße Windenergieanlage erlaubt es, von der sich entfernt von der Windenergieanlage befindenden Fernüberwachungseinrichtung ein Notfahrtsignal an die Fernverbindungssteuerung des Windenergieanlage abzusetzen. Nach Auslösen der Sicherheitseinrichtung und eingeleiteter Sicherheitsabschaltung der Windenergieanlage steuert die Notfahrt-Steuerungseinrichtung die Azimutbremse und den Azimutantrieb zu einer Notfahrt an, bevorzugt bis zu einer Azimut-Position mit einem aus dem Wind gedrehten Rotor. Die Ansteuerung durch die Notfahrt-Steuerungseinrichtung erfolgt bei ausgelöster Sicherheitsabschaltung und Vorliegen eines Fehlers in der Betriebsführung. Der Vorteil der erfindungsgemäßen Windenergieanlage liegt darin, dass, selbst wenn die Sicherheitseinrichtung eine Sicherheitsabschaltung der Windenergieanlage veranlasst hat und die Betriebsführung aufgrund eines Fehlers nicht mehr zur Verfügung steht, von der Fernverbindungssteuerung ausgehend von dem Notfahrtsignal der Azimutantrieb und die Azimutbremse der Windenergieanlage zu einer Notfahrt angesteuert werden können, um den Rotor aus dem Wind zu drehen. Bei der Windenergieanlage ist die Betriebsführung die logisch verantwortliche Steuerung für den Azimutantrieb, die Azimutbremse und den Pitchantrieb, solange kein Fehler in der Betriebsführung vorliegt. Dies bedeutet, dass die Betriebsführung über weitere Steuerungen auf logisch untergeordneter Ebene den Azimutantrieb und -bremse sowie den Pitchantrieb steuern kann. Liegt ein Fehler in der Betriebsführung vor und ist die Sicherheitsabschaltung eingeleitet, so wird die Steuerungsaufgabe an die Notfahrt-Steuerungseinrichtung übergeben.

In einer bevorzugten Ausgestaltung der Erfindung ist die Notfahrt-Steuerungseinrichtung so ausgebildet, dass das Maschinenhaus mit der Notfahrt in eine Position gedreht wird, in der die Längsachse des Maschinenhauses quer, insbesondere um 90° gedreht zur Windrichtung steht.

In einer bevorzugten Ausgestaltung schaltet die Notfahrt-Steuerungseinrichtung für die Notfahrt Betriebsparameter in dem Azimutantrieb um. Das Umschalten der Betriebsparameter erlaubt es, den Azimutantrieb, auch wenn ansonsten eine Vielzahl von Komponenten in der Windenergieanlage ausgeschaltet sind, zur Drehung des Maschinenhauses anzusteuern. Die umgeschalteten Betriebsparameter können hierbei beispielsweise eine geänderte Spannungsversorgung für die Antriebe und andere sich aus der Sicherheitsabschaltung ergebende Umstände berücksichtigen. Bevorzugt weist der Azimutantrieb mehrere Azimutantriebseinheiten mit jeweils einem Azimutumrichter auf. In einer als Normalbetrieb vorgesehenen Betriebsart ist ein Azimutumrichter der "Master" und die anderen Azimutumrichter sind "Follower". Für die Notfahrt wird die Betriebsart "Master/Follower" durch Parameterumschaltung abgewählt. Jeder Azimutumrichter wird dann nachfolgend durch die Notfahrt-Steuerungseinrichtung separat angesteuert.

In einer bevorzugten Ausgestaltung steuert die Notfahrt-Steuerungseinrichtung die Azimutbremse und den Azimutantrieb während der Notfahrt an. Bevorzugt ist die Windenergieanlage in ihrer um 90° gegenüber der Windrichtung gedrehten Azimut-Position aus dem Wind gedreht. Hierbei übernimmt die Notfahrt-Steuerungseinrichtung die logisch übergeordnete Funktion bei der Ansteuerung der Azimutbremse und des Azimutantriebs. Zur Umsetzung der Ansteuerung kann die Notfahrt-Steuerungsvorrichtung entweder die Azimutbremse und den Azimutantrieb direkt ansteuern oder über die Betriebsführung den Steuervorgang vornehmen.

In einer bevorzugten Ausgestaltung der Erfindung ist die Notfahrt-Steuerungseinrichtung dazu ausgelegt, eine Notfahrt der Azimutantriebe nur bei ausgelöster Sicherheitseinrichtung und einem Fehler in der Betriebsführung zu aktivieren. Eine Notfahrt während des Betriebs oder bei Stillstand der Windenergieanlage, ohne dass dieser durch eine Sicherheitsabschaltung bewirkt worden ist, kann von der Notfahrt-Steuerungseinrichtung nicht ausgelöst werden. Auch ein Fehler in der Betriebsführung ist Voraussetzung für ein Aktivieren der Notfahrt-Steuerungseinrichtung. Der Vorteil besteht darin, dass eine Notfahrt nicht unnötigerweise ausgelöst werden kann, da sie ein sehr weitgehender Eingriff in die Betriebsführung ist und nur als letzte Maßnahme zur Verhinderung eines Totalverlustes der Anlage möglich sein soll.

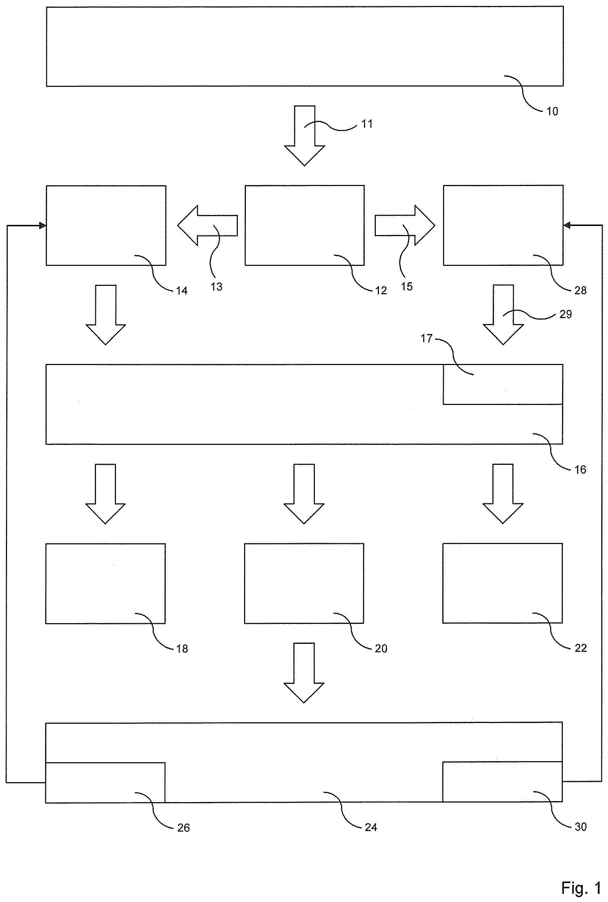

Die Erfindung wird nachfolgend an einem bevorzugten Ausführungsbeispiel näher erläutert:
Die einzige Figur zeigt ein schematisches Blockschaltbild, mit dem die einzelnen Schritte zur Ansteuerung der Notfahrt dargestellt werden. Ausgangssituation ist in Start 10 die Situation, in der eine Sicherheitskette der Windenergieanlage ausgelöst wird. Das Auslösen der Sicherheitskette kann beispielsweise durch einen Fehler im Pitchsystem hervorgerufen werden, der in Folge zu einer Überdrehzahl am Rotor führt. Hinzu kommt als Voraussetzung für den Start 10, dass ein Fehler in der Betriebsführung 14 auftritt. Allgemein steht Start 10 für das Auftreten eines Fehlers, der sicherheitsrelevant ist und möglicherweise die Sicherheitskette auslöst, sowie einen Fehler in der Betriebsführung 14 verursacht oder verursachen kann.

In einer nachfolgenden Überprüfung 12 wird anhand von Fehlersignalen 11 signalisiert, ob die Betriebsführung einen Fehler aufweist und nicht länger verfügbar ist. Nicht bei jedem Fehler, der zu einem Auslösen der Sicherheitskette führen kann, ist auch die Verfügbarkeit der Betriebsführung eingeschränkt. Wird allerdings die Sicherheitskette ausgelöst, so kann die Betriebsführung in der Überprüfung 12 unter Umständen nur begrenzt oder für eine kurze Zeit zur Verfügung stehen.

Steht die Betriebsführung 14 dauerhaft oder ausreichend lange zur Verfügung, so generiert sie digitale Ausgangssignale, die an eine Notfahrt-Steuerungseinrichtung 16 weitergeleitet werden. Im Normalbetrieb steuert die Turbinensteuerung (Betriebsführung) den Azimutantrieb, die Azimutbremse und den Pitchantrieb an, als übergeordnete Steuerung. Eine Azimutpositionierung erfolgt üblicherweise mit "schleifenden" Azimutbremsen. Die Notfahrt-Steuerungseinrichtung 16 ist dauerhaft zwischen die Turbinensteuerung und die anzusteuernden Komponenten eingefügt. Daher ist die Notfahrt-Steuerungseinrichtung sowohl aktiv, wenn die Turbinensteuerung ordnungsgemäß funktioniert als auch, wenn diese einen Fehler aufweist. Die Notfahrt-Steuerungseinrichtung 16 steuert dann schematisch dargestellte Schaltelemente 18 für eine Spannungsversorgung an. Ferner erfolgt eine Ansteuerung des Azimutantriebs 20. Der Azimutantrieb 20 umfasst einen Azimutmotor und einen Azimutumrichter, dessen Betriebsparameter für die Notfahrt 24 geändert werden. In einer als Normalbetrieb vorgesehenen Betriebsart ist ein Azimutumrichter als "Master" vorgesehen und die übrigen Azimutumrichter sind als "Follower" konfiguriert. Bei einer Änderung der Betriebsparameter für eine Notfahrt 24 wird die Betriebsart "Master/Follower" abgewählt und jeder der Azimutumrichter wird separat und unabhängig von den anderen Azimutumrichtern angesteuert. Der Azimutumrichter kann mit Signalen für Start, Stopp und Wahl der Drehrichtung des Azimutmotors angesteuert werden.

Ferner wird über die Notfahrt-Steuerungseinrichtung 16 die Azimutbremse 22 angesteuert. Durch das Zusammenspiel der Ansteuerung des Azimutantriebs 20 und der Ansteuerung der Azimutbremse 22 erfolgt die Notfahrt 24 des Azimutantriebs 20, mit der das Maschinenhaus mit seiner Längsrichtung um 90° gegenüber der Windrichtung gedreht wird.

Durch das Zusammenspiel der Schaltelemente 18, des Azimutantriebs 20 und der Azimutbremse 22 erfolgt die Notfahrt 24 des Azimutantriebs. Die Notfahrt 24 endet mit der Überprüfung 26, die mit einem Signal an die Betriebsführung 14 zurückmeldet, dass eine Azimut-Position des Maschinenhauses von 90° gegenüber der Windrichtung erreicht ist.

Stellt sich bei der anfänglichen Überprüfung 12 heraus, dass die Betriebsführung 14 nicht länger oder nicht ausreichend lange zur Verfügung steht, beispielsweise, weil die Sicherheitskette bereits ausgelöst ist, so kann ein Servicemitarbeiter, beispielsweise über einen Computer 28, ein Steuersignal 29 für eine Notfahrt des Azimutantriebs 20 an eine Fernverbindungssteuerung 17 absetzen. Für das Absetzen des Steuersignals 29 kann beispielsweise vorgesehen sein, dass der Servicemitarbeiter über das Internet eine passwortgeschützte Verbindung von dem Computer 28 zur Fernverbindungssteuerung 17 herstellt. Dadurch übernimmt für diesen Fall die Notfahrt-Steuerungseinrichtung 16 die Steuerung der Schaltelemente 18, des Azimutantriebs 20 und der Azimutbremse 22 für die Notfahrt 24. Im Gegensatz zu der nur durch die Betriebsführung 14 generierten Notfahrt 24 wird jedoch durch eine visuelle Kontrolle 30 eines Servicemitarbeiters das Erreichen der gewünschten Azimutposition festgestellt.

Die Notfahrt-Steuerungseinrichtung 16 kann beispielsweise als ein sogenannter WEB-IO-Server ausgebildet sein. Ein solcher Server verfügt über eine Vielzahl von Ein- und Ausgängen mit unterschiedlichen Stromstärken und Spannungen. Der WEB-IO-Server kann mittels einer Fernverbindungssteuerung 17, die als integrierte Netzwerkschnittstelle des WEB-IO-Servers ausgestaltet sein kann, über das Internet mit verschiedenen Datenprotokollen für das Steuersignal 29 angesteuert werden. Über eine solche Datenverbindung zwischen der entfernt liegenden Fernüberwachungseinrichtung und der Fernverbindungssteuerung 17 können die entsprechenden Verfahrensschritte ausgelöst werden.

Die visuelle Kontrolle 30 kann beispielsweise über eine an der Windenergieanlage vorgesehene Kamera erfolgen. Auch umfasst die visuelle Kontrolle die Übertragung von gemessenen Daten, wie beispielsweise Windrichtung und Azimut-Winkel, an die Fernüberwachungseinrichtung, wo diese Daten für eine visuelle Kontrolle graphisch dargestellt werden können.

### Bezugszeichenliste

- 10: Start
- 12: Überprüfung
- 14: Betriebsführung
- 16: Notfahrt-Steuerungseinrichtung
- 17: Fernverbindungssteuerung
- 18: Schaltelemente
- 20: Azimutantrieb
- 22: Azimutbremse
- 24: Notfahrt
- 26: Überprüfung der Azimutposition
- 28: Computer für Servicemitarbeiter
- 29: Steuersignal
- 30: visuelle Kontrolle

## Patentansprüche

1. Windenergieanlage mit einem Turm und einem auf dem Turm drehbar gelagerten Maschinenhaus, das über einen Azimutantrieb (20) und eine Azimutbremse (22) um eine Turmachse verstellbar ist und das einen Rotor mit mindestens einem von einem Pitchantrieb um seine Längsachse verstellbaren Rotorblatt aufweist, wobei eine Betriebsführung (14) vorgesehen ist, die den Azimutantrieb (20), die Azimutbremse (22) und den Pitchantrieb ansteuert, und die Windenergieanlage eine Sicherheitseinrichtung aufweist, bei deren Auslösen eine Sicherheitsabschaltung der Windenergieanlage erfolgt,
**dadurch gekennzeichnet, dass**
eine Notfahrt-Steuerungseinrichtung (16) vorgesehen ist, die bei ausgelöster Sicherheitsabschaltung und Vorliegen eines Fehlers in der Betriebsführung (14), ansprechend auf ein Notfahrtsignal (29) aus einer Fernverbindungssteuerung (17), die Azimutbremse (22) und den Azimutantrieb (20) zu einer Notfahrt (24) des Azimutantriebs (20) ansteuert.

2. Windenergieanlage nach Anspruch 1, **dadurch gekennzeichnet, dass** die Notfahrt (24) des Azimutantriebs (20) eine Drehung des Maschinenhauses in eine Position bewirkt, in der eine Längsachse des Maschinenhauses quer zur Windrichtung steht.

3. Windenergieanlage nach Anspruch 1 oder 2, **dadurch gekennzeichnet, dass** die Notfahrt-Steuerungseinrichtung (16) für die Notfahrt (24) in dem Azimutantrieb (20) die Betriebsparameter umschaltet.

4. Windenergieanlage nach Anspruch 3, **dadurch gekennzeichnet, dass** der Azimutantrieb (20) mehrere Azimutantriebseinheiten aufweist, die bei einer Notfahrt (24) unabhängig voneinander angesteuert werden.

5. Windenergieanlage nach einem der Ansprüche 1 bis 4, **dadurch gekennzeichnet, dass** die Notfahrt-Steuerungseinrichtung (16) die Azimutbremse (22) und den Azimutantrieb (20) während der Notfahrt (24) ansteuert.

6. Windenergieanlage nach einem der Ansprüche 1 bis 5, **dadurch gekennzeichnet, dass** die Notfahrt-Steuerungseinrichtung (16) Schaltelemente (18) für eine Spannungsversorgung des Azimutantriebs (20) und/oder der Azimutbremse (22) ansteuert.

7. Windenergieanlage nach einem der Ansprüche 1 bis 6, **dadurch gekennzeichnet, dass** die Notfahrt-Steuerungseinrichtung (16) eine Notfahrt (24) nur bei ausgelöster Sicherheitseinrichtung zulässt.

## Claims

1. A wind turbine with a tower and a nacelle rotatably mounted on the tower, which can be adjusted around a tower axis via an yaw drive (20) and an yaw brake (22), and which has a rotor with at least one rotor blade which can be adjusted around its longitudinal axis by a pitch drive, wherein an operation management (14) is provided which commands the yaw drive (20), the yaw brake (22) and the pitch drive, and the wind turbine has a safety device at the release of which a safety shutdown of the wind turbine takes place,
**characterised in that**
an emergency operation control device (16) is provided, which commands the yaw brake (22) and the yaw drive (20) to an emergency operation (24) of the yaw drive (20) upon released safety shutdown and existence of an error in the operation management (14), in reaction to an emergency operation signal (29) from a remotely connected command device (17).

2. The wind turbine according to claim 1, **characterised in that** the emergency operation (24) of the yaw drive (20) effects a turn of the nacelle into a position in which a longitudinal axis of the nacelle is crosswise to the wind direction.

3. A wind turbine according to claim 1 or 2, **characterised in that** for the emergency operation (24), the emergency operation control device (16) switches over the operation parameters in the yaw drive (20).

4. The wind turbine according to claim 3, **characterised in that** the yaw drive (20) has several yaw drive units, which are controlled independently from each other in an emergency operation (24).

5. A wind turbine according to any one of the claims 1 to 4, **characterised in that** the emergency operation control device (16) controls the yaw brake (22) and the yaw drive (20) during the emergency operation (24).

6. A wind turbine according to any one of the claims 1 to 5, **characterised in that** the emergency operation control device (16) controls switching elements (18) for a voltage supply of the yaw drive (20) and/or the yaw brake (22).

7. A wind turbine according to any one of the claims 1 to 6, **characterised in that** the emergency operation control device (16) permits an emergency operation (24) only at released safety device.

## Revendications

1. Eolienne avec une tour et une nacelle montée de manière rotative sur la tour, qui peut être ajustée autour d'un axe de tour par un entraînement azimutal (20) et un frein de giration (22), et qui a un rotor avec au moins une pale du rotor qui peut être ajustée autour de son axe longitudinal par un moteur de pas, une gestion de fonctionnement (14) étant prévue qui contrôle l'entraînement azimutal, (20), le frein de giration (22) et le moteur de pas, et l'éolienne a un dispositif de sécurité au moment du déclenchement duquel se fait une coupure de sécurité de l'éolienne,
**caractérisée en ce que**
un dispositif de commande pour l'opération d'urgence (16) est prévu, qui excite le frein de giration (22) et l'entraînement azimutal (20) à une opération d'urgence (24) de l'entraînement azimutal (20) après coupure de sécurité déclenchée et existence d'une erreur dans la gestion de fonctionnement (14), en réaction à un signal d'opération d'urgence (29) d'un dispositif de commande à connexion distante (17).

2. Eolienne selon la revendication 1, **caractérisée en ce que** l'opération d'urgence (24) de l'entraînement azimutal (20) effectue une rotation de la nacelle vers une position dans laquelle un axe longitudinal de la nacelle est en travers à la direction du vent.

3. Eolienne selon la revendication 1 ou 2, **caractérisée en ce que** pour l'opération d'urgence (24), le dispositif de commande pour l'opération d'urgence (16) commute les paramètres de fonctionnement dans l'entraînement azimutal (20).

4. Eolienne selon la revendication 3, **caractérisée en ce que** l'entraînement azimutal (20) a plusieurs unités d'entraînement azimutal, qui sont excitées indépendamment l'une de l'autre dans une opération d'urgence (24).

5. Eolienne selon l'une quelconque des revendications 1 à 4, **caractérisée en ce que** le dispositif de commande pour l'opération d'urgence (16) excite le frein de giration (22) et l'entraînement azimutal (20) pendant l'opération d'urgence (24).

6. Eolienne selon l'une quelconque des revendications 1 à 5, **caractérisée en ce que** le dispositif de commande pour l'opération d'urgence (16) excite des éléments de commutation pour une alimentation électrique (18) de l'entraînement azimutal (20) et/ou pour le frein de giration (22).

7. Eolienne selon l'une quelconque des revendications 1 à 6, **caractérisée en ce que** le dispositif de commande pour l'opération d'urgence (16) permet une opération d'urgence (24) seulement après dispositif de sécurité déclenché.
